# EUROPÄISCHE PATENTSCHRIFT

(11) **EP 3 149 660 B1**
(45) Veröffentlichungstag und Bekanntmachung des Hinweises auf die Patenterteilung: **30.01.2019**
(21) Anmeldenummer: 15724174.6
(22) Anmeldetag: 12.05.2015
(51) Int. Cl.: G06K 19/00, B26D 5/00, B32B 38/14, B32B 38/00

(54) **DATENTRÄGERHERSTELLUNGSVERFAHREN UND BEARBEITUNGSVORRICHTUNG**
DATA CARRIER PRODUCTION METHOD AND PROCESSING DEVICE
PROCÉDÉ DE FABRICATION DE SUPPORTS DE DONNÉES ET DISPOSITIF D'USINAGE

(30) Priorität: 27.05.2014 DE 102014007930
(43) Veröffentlichungstag der Anmeldung: 05.04.2017
(73) Patentinhaber: Giesecke+Devrient Mobile Security GmbH, 81677 München (DE)
(72) Erfinder: TARANTINO, Thomas, 83410 Laufen (DE); VIROSTEK, Eric, Silver Lake, OH 44224 (US)
(86) Internationale Anmeldenummer: PCT/EP2015/000995
(87) Internationale Veröffentlichungsnummer: WO 2015/180827

(56) Entgegenhaltungen:
- DE-A1-102009 053 097
- US-A- 5 888 624

## Beschreibung

### Technisches Gebiet

Die vorliegende Erfindung bezieht sich auf ein Verfahren zum Herstellen eines Datenträgers sowie eine Bearbeitungsvorrichtung, mit der ein Datenträger hergestellt werden kann.

Unter einem "Datenträger" im Sinne der Erfindung werden unter anderem eine Bankkarte, insbesondere eine Kreditkarte, eine Ausweiskarte, eine Vorteilskarte und/ oder eine Eintrittskarte verstanden, wobei all diesen Karten gemeinsam ist, dass sie dazu in der Lage sind Daten zu speichern. Grundlagen zur Art, zum Aufbau und zu Anwendungsmöglichkeiten von Datenträgern werden in dem Buch "Handbuch der Chipkarten" (Rankl/ Effing, 5. Auflage) beschrieben.

### Stand der Technik

Im Stand der Technik ist eine Vielzahl von Herstellverfahren für portable Datenträger bekannt. Diese Verfahren betreffen unterschiedliche Ausprägungen und Gestaltungsmöglichkeiten für Datenträger, insbesondere Chipkarten.

Die WO 2013/041808 A1 betrifft ein Verfahren zum Einfärben einer Kante eines Stapels aus einer Vielzahl von Datenträgern. Bei diesem Verfahren wird mittels einer Pulverbeschichtungseinrichtung auf die umlaufende Kante eines Datenträgers eine Farbschicht aufgetragen, welche anschließend mittels einer Heizeinrichtung getrocknet wird.

Aus der US 5,888,624 geht eine Einrichtung hervor, mittels welcher ein farbiger Lack auf die umlaufende Kante eines Datenträgers aufgebracht werden kann. Die Datenträger können einzeln oder gestapelt lackiert werden. Anschließend werden die Datenträger ebenfalls getrocknet.

Aus der DE 10 2009 053 097 A1 geht ein Laminierverfahren und ein Verfahren zum Trennen von Laminat hervor, bei welchem Schnittmarken auf ein Laminiermaterial vorab aufgedrückt werden, um Kosten einer Laminiereinrichtung zu reduzieren, da so bei der Zuführung von Laminiermaterial und Trägermaterial eine Synchronisation vermieden werden kann.

Nachteilig an diesen Verfahren ist, dass sie relativ aufwendig in einen Kartenherstellungsprozess zu integrieren sind. Denn es ist stets notwendig, dass ein ausgestanzter und/ oder spritzgegossener Datenträger nach der Herstellung einzeln oder gestapelt aus dem Fertigungsprozess entnommen wird und in einer weiteren Fertigungsstation mit einer Farbschicht versehen wird.

Ferner ist es, anstatt lediglich die Kante bzw. den Rand eines Datenträgers einzufärben, bekannt den Datenträger aus einer Vielzahl an Folien zu laminieren, wobei die einzelnen Folien des Folienstapels in der gewünschten Kantenfarbe ausgeführt sind. Dieses Verfahren weist den Nachteil auf, dass sich die Lagerhaltungskosten in einer Kartenherstellungsstätte vergrößern, da eine Vielzahl an Folien in unterschiedlichen Farben vorgehalten werden muss. Ferner sind farbige Folien beim anschließenden Bedrucken nicht vorteilhaft, weil diese vor dem Bedrucken zunächst entfärbt werden müssen, um ein optimales Druckergebnis zu erzielen. Weiterhin sind vereinzelt Fälle bekannt, in denen die in den farbigen Folien verwendeten Einfärbmaterialien die Datenübertragungsraten von kontaktlosen Datenträgern negativ beeinflussen.

### Darstellung der Erfindung

Der Erfindung liegt die Aufgabe zugrunde, ein Datenträgerherstellungsverfahren sowie eine Bearbeitungsvorrichtung zur Verfügung zu stellen, das bzw. die bekannten Probleme aus dem Stand der Technik löst und dazu geeignet ist eine einfache Möglichkeit zum Auftragen von Farbe auf eine umlaufende Kante eines Datenträgers zur Verfügung zu stellen.

Die Lösung der Aufgabe erfolgt durch ein Datenträgerherstellungsverfahren gemäß dem unabhängigen Patentanspruch 1 sowie durch eine Bearbeitungsvorrichtung gemäß dem unabhängigen Anspruch 7. Bevorzugte Ausgestaltungen des erfindungsgemäßen Datenträgerherstellungsverfahrens sowie der erfindungsgemäßen Bearbeitungsvorrichtung ergeben sich aus den Unteransprüchen.

Der Erfindung liegt der Gedanke zugrunde, das Aufbringen von Farbe auf die umlaufende Kante eines Datenträgers derart zu vereinfachen, dass der Farbauftrag in einem Zug mit dem Ausstanzen des Datenträgers aus dem Datenträgerbogen erfolgen kann.

Demgemäß umfasst ein erfindungsgemäßes Datenträgerherstellungsverfahren das Ausbilden eines Datenträgerbogens, wobei die Abmessungen des Datenträgerbogens in zumindest einer Dimension größer als ein herzustellender Datenträger sind, das Ausstanzen des Datenträgers aus dem Datenträgerbogen mittels einer Stanzeinrichtung aufweisend eine männliche Stanzeinheit (Gesenk) und eine weibliche Stanzeinheit (Matrize), wobei die weibliche Stanzeinheit mit einer Farbauftrageinrichtung versehen ist, die derart mit der männlichen Stanzeinheit zusammenwirkt, dass beim Ausstanzen des Datenträgers und/oder beim Ausbringen des Datenträgers aus der weiblichen Stanzeinheit ein Farbauftrag auf eine Datenträgerkante des gestanzten Datenträgers erfolgt.

Unter einer Stanzeinrichtung wird jede Art von Einrichtung verstanden, die zum Ausstanzen eines Datenträgers aus einem Datenträgerbogen geeignet ist. Der Vorgang des Ausstanzens wird in dem Buch "Vom Plastik zur Chipkarte" (Carl Hanser Verlag; Yahya Haghiri, Thomas Tarantino, 1999, Kapitel 3.1.1) beschrieben. Weitere Scher- und Stanzverfahren gemäß DIN 8588 werden im Buch "Dubbel - Taschenbuch für den Maschinenbauer" (21. Auflage, Springer-Verlag) im Kapitel S.4.5 beschrieben.

Statt des Begriffes "Stanzen" können auch alternativ Begriffe wie Schneiden, Scherschneiden, Messerschneiden, Beißschneiden, Spalten, Reißen und/ oder Brechen verwendet werden. Die Begriffe "Scherschneiden" bzw. "Stanzen" geben jedoch den Vorgang gemäß der Erfindung, bei dem zumindest ein einzelner Datenträger aus einem Datenträgerbogen herausgetrennt wird, geeignet wieder.

Mit dem erfindungsgemäßen Verfahren ist es besonders vorteilhaft möglich, direkt bei dem Arbeitsschritt des Ausstanzens des Datenträgers und/ oder beim Ausbringen des Datenträgers aus der weiblichen Stanzeinheit die umlaufende Datenträgerkante des frisch gestanzten Datenträgers mit Farbe zu versehen. Auf diese Weise entfällt mit Vorteil das Überführen des Datenträgers an eine separate Arbeitsstation, in der ein Farbauftrag erfolgt. Mit dem erfindungsgemäßen Verfahren kann der notwendige Schritt des Ausbringens des gestanzten Datenträgers aus der weiblichen Stanzeinheit vorteilhaft dazu genutzt werden, um die umlaufende Kante mit Farbe zu versehen. Auf diese Weise ist es möglich auf das Verwenden von vorab eingefärbten Folien bei der Ausbildung des Datenträgerbogens zu verzichten, wenn diese Folien vorwiegend dem Zweck dienen, dass die umlaufende Kante des Datenträgers eingefärbt ist. Somit kann der aufwendige Schritt des Entfärbens der Datenträgeroberseite vor dem Bedrucken entfallen. Ferner bleiben besonders bei Verarbeitung eines Datenträgers mit einer Kontaktlosschnittstelle die Datenübertragungseigenschaften des Datenträgers erhalten, da beim Einfärben der Folien sich die Datenübertragungsrate der Kontaktlosschnittstelle reduzieren kann. Ferner ist es durch das Einfärben der Datenträgerkante möglich auf das Vorhalten einer Vielzahl unterschiedlich eingefärbter Datenträgerfolien zu verzichten, wodurch Lagerhaltungskosten sinken.

Gemäß einer Ausführungsform erfolgt das Auftragen der Farbe mittels einer oder mehrerer Düsen, getränkten Bürsten, Jetdüsen und/ oder Schwämmen. Auf diese Weise ist es möglich einen sauberen und gleichmäßigen Farbauftrag auf die Datenträgerkante sicherzustellen. Ferner ermöglicht die Verwendung dieser Einrichtungen einen schnellen Farbwechsel, so dass es besonders vorteilhaft möglich ist, Datenträger in der "Losgröße 1" zu produzieren, ohne lange Umrüstzeiten einplanen zu müssen.

Mittels der Farbauftrageinrichtung ist es ferner möglich, dass der Farbauftrag entlang der Umlaufrichtung der Datenträgerkarte in Sektionen erfolgt, wobei in jeder Sektion ein unterschiedlicher Farbauftrag erfolgen kann. Auf diese Weise ist es vorteilhaft möglich, auch auf der umlaufenden Datenträgerkante unterschiedliche Farbmuster aufzutragen. Beispielsweise könnten die Farben des ausgebenden Unternehmens des Datenträgers (Corporate Identitiy) und/ oder die Landesfarben des Landes, aus dem der Datenträger stammt, aufgebracht werden.

Gemäß einer weiteren bevorzugten Ausführungsform ist die Farbauftrageinrichtung in der weiblichen Stanzeinheit vorgesehen. Die Farbauftrageinrichtung kann unmittelbar einer Schneidkante der weiblichen Stanzeinheit nachgeordnet vorgesehen sein, so dass direkt nach dem Schneiden der Farbauftrag erfolgen kann. Alternativ kann die Farbauftrageinrichtung im Ausbringbereich der Datenträger aus der weiblichen Stanzeinheit vorgesehen sein. Die Farbauftrageinrichtung ist derart in der weiblichen Stanzeinheit anzuordnen, dass ein ordentlicher und gleichmäßiger Farbauftrag gewährleistet werden kann.

Der Datenträgerbogen, aus dem die Datenträger ausgestanzt werden, kann so dimensioniert sein, dass aus ihm eine Vielzahl an Datenträgern ausstanzbar ist.

Die Vorteile der Erfindung zeigen sich nicht nur in einem erfindungsgemäßen Verfahren, sondern auch in einer erfindungsgemäßen Bearbeitungsvorrichtung umfassend eine männliche Stanzeinheit und eine weibliche Stanzeinheit, wobei die männliche und die weibliche Stanzeinheit dazu ausgebildet sind, um aus einem Datenträgerbogen einen Datenträger auszustanzen, wobei die weibliche Stanzeinheit mit einer Farbauftrageinrichtung zum Auftragen von Farbe auf eine umlaufende Kante, eines Datenträgers versehen ist. Mit der erfindungsgemäßen Bearbeitungsvorrichtung ist es besonders vorteilhaft möglich Farbe auf eine umlaufende Kante eines Datenträgers aufzutragen. Die erfindungsgemäße Bearbeitungsvorrichtung ermöglicht es auf einfache Weise, das ohnehin notwendige Ausbringen der Datenträger aus der weiblichen Stanzeinheit dazu zu nutzen, um während des Ausbringens die umlaufende Kante des Datenträgers mit Farbe zu versehen.

Gemäß einer bevorzugten Ausführungsform ist die Farbauftrageinrichtung derart in der weiblichen Stanzeinheit angeordnet, dass der ausgestanzte Datenträger beim Ausbringen des Datenträgers aus der Bearbeitungsvorrichtung, insbesondere beim Ausbringen des Datenträgers aus der weiblichen Stanzeinheit, mittels der Farbauftrageinrichtung mit Farbe versehen wird. Auf diese Weise ist eine nahtlose Integration des Farbaufbringschrittes in den Stanzvorgang möglich. Das Überführen des gestanzten Datenträgers hin zu einer zusätzlichen Farbaufbringstation kann somit entfallen, wodurch sich die Herstellungszeit der Datenträger deutlich verkürzt und ein zuverlässiger Farbauftrag sichergestellt wird.

Die Farbauftrageinrichtung kann derart ausgebildet sein, dass ein Wechsel der aufzutragenden Farbe ohne das Anhalten der Stanzeinrichtung, insbesondere zwischen dem Ausstanzen von zwei Datenträgern möglich ist.

Zusätzlich kann der weiblichen Stanzeinheit nachgeordnet eine Reinigungseinrichtung vorgesehen sein, die die beiden großen Oberflächen des Datenträgers nach dem Auftragen der Farbe auf die umlaufende Kante von der Farbe befreit, die gegebenenfalls auf die großen Flächen aufgetragen wird.

### Kurze Beschreibung der Zeichnungen

Fig. 1 zeigt eine Bearbeitungsvorrichtung gemäß einer ersten Ausführungsform der Erfindung;
Fig. 2 zeigt eine Bearbeitungsvorrichtung gemäß einer zweiten Ausführungsform der Erfindung;
Fig. 3 zeigt einen gemäß dem Datenträgerherstellungsverfahren der Erfindung hergestellten Datenträger;
Fig. 4 zeigt ein Flussdiagramm, das den Ablauf eines erfindungsgemäßen Verfahrens darstellt; und
Fig. 5 zeigt eine Bearbeitungsvorrichtung aus dem Stand der Technik.

### Beschreibung bevorzugter Ausführungsformen der Erfindung

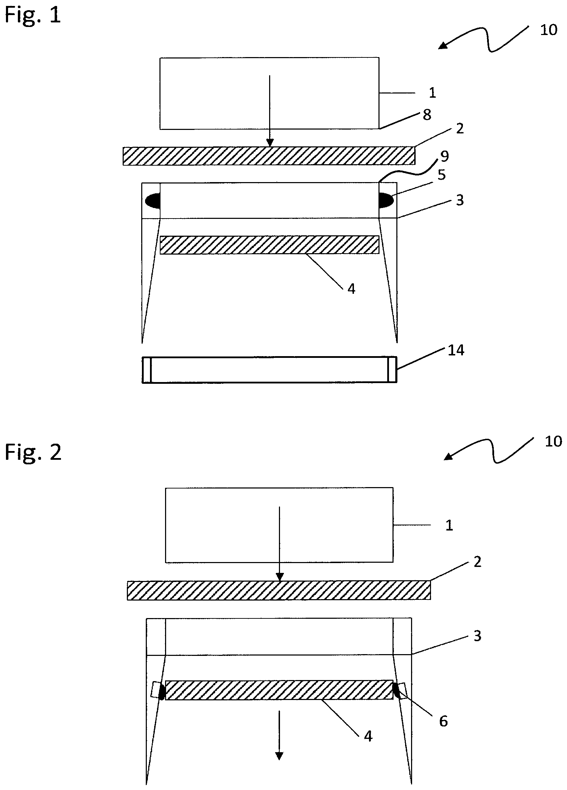

Im Folgenden wird die Erfindung unter Bezugnahme auf die Figuren 1 bis 4 anhand rein beispielhafter Ausführungsformen beschrieben.

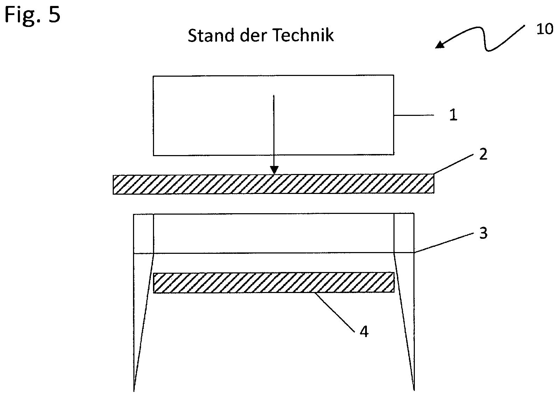

Fig. 5 zeigt zunächst eine Bearbeitungsvorrichtung 10 nach dem Stand der Technik. Die Bearbeitungsvorrichtung 10 weist eine Stanzeinrichtung 1, 3 auf, mit der ein Datenträgerbogen 2 gestanzt werden kann. Die Bearbeitungsvorrichtung 10 weist eine männliche Stanzeinheit 1 (Gesenk) und eine weibliche Stanzeinheit 3 (Matrize) auf. Die weibliche Stanzeinheit 3 weist Schneidkanten 8 auf, die die Außenkanten eines Datenträgers 4 definieren. In die Bearbeitungsvorrichtung 10 wird der Datenträgerbogen 2 eingebracht. Der Datenträgerbogen 2 ist bevorzugt als ein vorab laminierter Folienstapel ausgebildet. Der Datenträgerbogen weist in wenigstens einer Dimension eine größere Abmessung als der auszustanzende Datenträger 4 auf.

Beim Ausstanzen des Datenträgers 4 aus dem Datenträgerbogen 2 wird die männliche Stanzeinheit 1 in Richtung der weiblichen Stanzeinheit 3 bewegt, der Datenträger 4 wird ausgestanzt und aus der weiblichen Stanzeinheit 3 ausgeworfen. Alternativ können die männliche 1 und weibliche 3 Stanzeinheit aufeinander zu bewegt werden oder es kann die weibliche Stanzeinheit 3 in Richtung der männlichen Stanzeinheit 1 bewegt werden.

Soll ein Farbauftrag auf die Kante 12 des Datenträgers 4 erfolgen, so wird im Stand der Technik der Datenträger 4 in eine nachgeordnete Station eingebracht, in der ein einzelner Datenträger 4 und/ oder eine Vielzahl gestapelter Datenträger 4 mit einer Farbe beschichtet werden.

Bei dem erfindungsgemäßen Datenträgerherstellungsverfahren bzw. bei der erfindungsgemäßen Bearbeitungsvorrichtung erfolgt, wie in den Fig. 1 und 2 gezeigt, das Beschichten des Datenträgers 4 in der weiblichen Stanzeinheit 3. Dazu erfolgt unmittelbar nach dem Stanzen des Datenträgerbogens 2 mittels einer Farbauftrageinrichtung 5 ein Farbauftrag auf eine umlaufende Kante 12 des Datenträgers 4. Die Farbauftrageinrichtung 5 ist unmittelbar an einer Schneidkante 9 der weiblichen Stanzeinheit 3 angeordnet. Die aufgebrachte Farbe ist insbesondere ein Lack. Vorteil des Verfahrens ist, dass der definierte Vorschub der männlichen Stanzeinheit 1 dazu genutzt werden kann, um den frisch aus dem Datenträgerbogen 2 ausgestanzten Datenträger 4 mit einer vorbestimmten Vorschubgeschwindigkeit an der Farbauftrageinrichtung 5 vorbeizuführen. Auf diese Weise wird ein gleichmäßiger und deckender Farbauftrag auf die umlaufende Kante 12 des Datenträgers bewirkt. Das Verfahren eignet sich für alle flachen Datenträger mit durch Stanzen hergestellter Seitenkante unabhängig von ihrer Bauform. Es können also gleichermaßen kontaktlose und/ oder kontaktbehaftete Datenträger 4 hergestellt werden. Die Datenträger 4 können bspw. als Bankkarten, Kreditkarten, Ausweiskarten, Pässe, Vorteilskarten und/ oder Eintrittskarten verwendet werden.

Der Farbauftrag in der Farbauftrageinrichtung 5 kann mittels einer oder einer Vielzahl an Düsen, getränkten Bürsten, Jetdüsen und/ oder Schwämmen erfolgen. Der Farbauftrageinrichtung 5 nachgeordnet sein, kann eine Farbtrocknungseinrichtung 14 und/ oder eine UV-Härtungseinrichtung 14 zum Aushärten der Farbe. Fig. 1 zeigt eine kombinierte Farbtrocknungseinrichtung und UV-Härtungseinrichtung 14.

Gemäß einer Ausführungsform kann der Farbauftrag mit der Farbauftrageinrichtung 6 in Umlaufrichtung entlang der Datenträgerkante 12 in Sektionen erfolgen. Die einzelnen Sektionen können jeweils eine unterschiedliche Farbe aufweisen.

Fig. 2 zeigt eine alternative Ausführungsform der erfindungsgemäßen Bearbeitungsvorrichtung 10. Im Unterschied zur Fig. 1 ist in Fig. 2 die Farbauftrageinrichtung 6 weiter entfernt von der Schneidkante der weiblichen Schneideinheit 3 angeordnet. Der Farbauftrag erfolgt auf analoge Weise wie bei der Farbauftrageinrichtung 5 in Fig. 1. Um einen definierten Vorschub des Datenträgers durch die weibliche Stanzeinheit 3 zu gewährleisten, kann vorgesehen sein, dass die männliche Stanzeinheit 1 im Vergleich zu dem in Fig. 1 gezeigten Ausführungsbeispiel tiefer in die weibliche Stanzeinheit 3 eindringt. Alternativ können zusätzliche Mittel, wie beispielsweise eine Datenträgerausbringvorrichtung in der weiblichen Stanzeinheit vorgesehen sein, die das sichere Ausbringen des gestanzten Datenträgers 4 mit definierter Vorschubgeschwindigkeit aus der weiblichen Stanzeinheit 3 ermöglichen.

Die Farbauftrageinrichtung 5, 6 kann so gestaltet sein, dass sie in der Lage ist in Umlaufrichtung unterschiedliche Farben auf die Kante 12 des Datenträgers 4 aufzubringen. Auf diese Weise kann der Datenträger entsprechend den Wünschen des Auftraggebers/ Kunden mit unterschiedlichen Farben in Umlaufrichtung versehen werden.

Die Farbauftrageinrichtung 5, 6 kann ferner mit einer Farbwechseleinrichtung versehen sein, die einen raschen Wechsel der Farben ermöglicht. Auf diese Weise ist es bei der Herstellung von Datenträgern 4 bereits bei der "Losgröße 1" möglich, rasche Farbwechsel zwischen zwei aufeinanderfolgenden Datenträgern 4 zu vollziehen.

Zusätzlich oder alternativ zu der Farbwechseleinrichtung kann eine Datenträgerreinigungseinrichtung vorgesehen sein, die in der Bearbeitungsvorrichtung 10 und/ oder hinter der Bearbeitungsvorrichtung 10 angeordnet ist. Die Datenträgerreinigungsvorrichtung kann bspw. in die Farbtrocknungseinrichtung 14 integriert sein. Mit der Datenträgerreinigungseinrichtung kann gegebenenfalls auftretende überschüssige Farbe an den beiden großen Oberflächen des Datenträgers 4 entfernt werden.

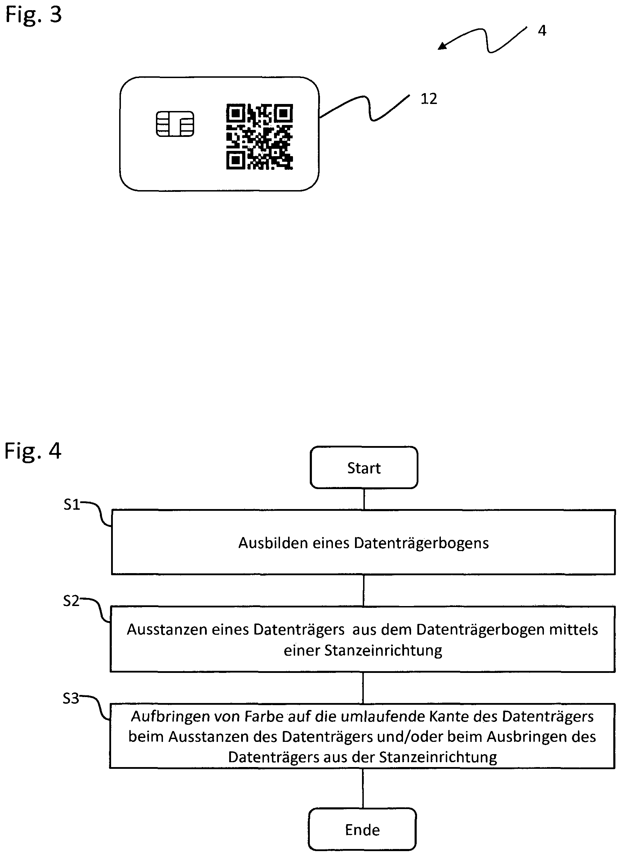

Fig. 4 zeigt den Ablauf eines erfindungsgemäßen Datenträgerherstellungsverfahrens. Im ersten Schritt S1 erfolgt die Ausbildung eines Datenträgerbogens 2 - z.B. durch Laminieren einer Mehrzahl von Folien. Der Datenträgerbogen 2 weist Abmessungen auf, die in zumindest einer Dimension größer sind als die Abmessungen des auszubildenden Datenträgers 4. Vorzugsweise weist ein Datenträgerbogen 2 die Abmessung einer Vielzahl von Datenträgern 4 in Längs- und Querrichtung auf.

Im darauffolgenden Schritt S2 wird der Datenträger 4 aus dem Datenträgerbogen 2 mittels einer Stanzeinrichtung 1, 3 aufweisend eine männliche Stanzeinheit 1 und eine weibliche Stanzeinheit 3 ausgestanzt.

Während der Datenträger 4 bedingt durch den Vorschub der männlichen Stanzeinheit 1 durch die weibliche Stanzeinheit 3 hindurchgedrückt wird, wird mit einer Farbauftrageinrichtung 5, 6 in einem nächsten Schritt S3 Farbe auf eine umlaufende Kante 12 des Datenträgers 4 aufgebracht. Die Farbauftrageinrichtung 5, 6 ist Teil der weiblichen Stanzeinheit 3. Bedingt durch das Hindurchschieben des gestanzten Datenträgers 4 durch die weibliche Stanzeinheit 3 mit einer definierten Vorschubgeschwindigkeit ist es möglich, einen gleichmäßigen Farbauftrag mit der Farbauftrageinrichtung 5, 6 auf den Datenträger 4 zu gewährleisten.

### Bezugszeichenliste

- 1: männliche Stanzeinheit
- 2: Datenträgerbogen
- 3: weibliche Stanzeinheit
- 4: Datenträger
- 5,6: Farbauftrageinrichtung
- 8: Schneidkante der weiblichen Stanzeinheit
- 9: Schneidkante der männlichen Stanzeinheit
- 10: Bearbeitungsvorrichtung
- 12: Datenträgerkante
- 14: Farbtrocknungseinrichtung, UV-Härtungseinrichtung
- S1-S3: Verfahrensschritte

## Patentansprüche

1. Herstellungsverfahren für einen kartenförmigen Datenträger, insbesondere eine Kreditkarte, eine Ausweiskarte, eine Vorteilskarte und/ oder eine Eintrittskarte, aufweisend die folgenden Schritte:
- Ausbilden eines Datenträgerbogens (2), wobei die Abmessungen des Datenträgerbogens in wenigstens einer Dimension größer als ein herzustellender Datenträger (4) sind,
- Ausstanzen des Datenträgers (4) aus dem Datenträgerbogen (2) mittels einer Stanzeinrichtung (1, 3) aufweisend eine männliche Stanzeinheit (1) und eine weibliche Stanzeinheit (3),
**dadurch gekennzeichnet, dass**
die weibliche Stanzeinheit (3) mit einer Farbauftrageinrichtung (5, 6) versehen ist, die derart mit der männlichen Stanzeinheit (3) zusammenwirkt, dass beim Ausstanzen des Datenträgers (4) und/ oder beim Ausbringen des Datenträgers (4) aus der weiblichen Stanzeinheit (3) ein Farbauftrag auf eine umlaufende Datenträgerkante (12) des gestanzten Datenträgers (4) erfolgt,
wobei die weibliche Stanzeinheit derart mit der Farbauftrageinrichtung versehen ist, dass der Farbauftrag in der weiblichen Stanzeinheit erfolgt.

2. Verfahren nach Anspruch 1, **dadurch gekennzeichnet, dass** das Auftragen der Farbe mittels einer oder mehrerer Düsen, getränkten Bürsten, Jetdüsen und/ oder Schwämmen erfolgt.

3. Verfahren nach Anspruch 1 oder 2, **dadurch gekennzeichnet, dass** der Farbauftrag entlang der Datenträgerkante (12) in Umlaufrichtung in Sektionen erfolgt, wobei in jeder Sektion ein unterschiedlicher Farbauftrag erfolgen kann.

4. Verfahren nach einem der vorhergehenden Ansprüche, **dadurch gekennzeichnet, dass** die Farbauftrageinrichtung (5, 6) in der weiblichen Stanzeinheit (3) angeordnet wird.

5. Verfahren nach einem der vorhergehenden Ansprüche, **dadurch gekennzeichnet, dass** das Ausbilden des Datenträgerbogens (2) durch Laminieren einer Vielzahl an Datenträgerfolien erfolgt.

6. Verfahren nach einem der vorhergehenden Ansprüche, **dadurch gekennzeichnet, dass** der Datenträgerbogen (2) derart dimensioniert ist, dass aus ihm eine Vielzahl an Datenträgern (4) ausstanzbar ist.

7. Bearbeitungsvorrichtung (10), insbesondere zum Ausstanzen von kartenförmigen Datenträgern (4), insbesondere eine Kreditkarte, eine Ausweiskarte, eine Vorteilskarte und/ oder eine Eintrittskarte, aus einem Datenträgerbogen (2), aufweisend:
- eine männliche Stanzeinheit (1) und eine weibliche Stanzeinheit (3), wobei die männliche Stanzeinheit (1) und die weibliche Stanzeinheit (3) dazu ausgebildet sind, um aus einem Datenträgerbogen (2), der in wenigstens einer Abmessung größer als ein herzustellender Datenträger (4) ist, einen Datenträger (4) auszustanzen,
**dadurch gekennzeichnet, dass**
die weibliche Stanzeinheit (3) mit einer Farbauftrageinrichtung (5) zum Auftragen von Farbe auf eine Kante (12), insbesondere eine umlaufende Kante, eines Datenträgers (4) versehen ist, wobei die Farbauftrageinrichtung (5) derart mit der männlichen Stanzeinheit (3) zusammenwirkt, dass beim Ausstanzen des Datenträgers (4) und/ oder beim Ausbringen des Datenträgers (4) aus der weiblichen Stanzeinheit (3) ein Farbauftrag auf eine umlaufende Datenträgerkante (12) des gestanzten Datenträgers (4) erfolgt, wobei die weibliche Stanzeinrichtung derart mit der Farbauftrageinrichtung versehen ist, dass der Farbauftrag in der weiblichen Stanzeinheit erfolgt.

8. Bearbeitungsvorrichtung nach Anspruch 7, **dadurch gekennzeichnet, dass** die Farbe mittels wenigstens einer Düse, getränkten Bürsten, Jetdüsen und/ oder Schwämmen durch die Farbauftrageinrichtung (5, 6) auftragbar ist.

9. Bearbeitungsvorrichtung nach einem der Ansprüche 7 und 8, **dadurch gekennzeichnet, dass** die Farbauftrageinrichtung (5, 6) dazu ausgebildet ist entlang der Datenträgerkante (12) in Umlaufrichtung die Farbe in Sektionen aufzutragen, wobei in jeder Sektion ein unterschiedlicher Farbauftrag erfolgen kann.

10. Bearbeitungsvorrichtung nach einem der Ansprüche 7 bis 9, **dadurch gekennzeichnet, dass** die Farbauftrageinrichtung (5, 6) mit einer Farbwechseleinrichtung versehen ist.

11. Bearbeitungsvorrichtung nach einem der Ansprüche 7 bis 10, **dadurch gekennzeichnet, dass** die Bearbeitungsvorrichtung (10) mit einer Datenträgerreinigungseinrichtung versehen ist.

## Claims

1. A production method for a card-shaped data carrier, in particular a credit card, an identification card, a bonus card and/ or an admission ticket, having the following steps:
- forming a data-carrier sheet (2), with the dimensions of the data-carrier sheet being greater in at least one dimension than a data carrier (4) to be manufactured,
- punching the data carrier (4) out of the data-carrier sheet (2) by means of a punching device (1, 3) having a male punching unit (1) and a female punching unit (3),
**characterized in that**
the female punching unit (3) bears a color applying device (5, 6) which interacts with the male punching unit (3) such that upon punching out the data carrier (4) and/ or upon discharging the data carrier (4) from the female punching unit (3) an application of color to a circumferential data-carrier edge (12) of the punched data carrier (4) is effected, wherein the female punching unit is provided with the color applying device such that the inking takes place in the female punching unit.

2. The method according to claim 1, **characterized in that** the applying of the color is effected by means of one or more nozzles, impregnated brushes, jet nozzles and/ or sponges.

3. The method according to claim 1 or 2, **characterized in that** the application of color is effected along the data-carrier edge (12) in the circumferential direction in sections, wherein a different application of color can be effected in every section.

4. The method according to any of the preceding claims, **characterized in that** the color applying device (5, 6) is arranged in the female punching unit (3).

5. The method according to any of the preceding claims, **characterized in that** forming the data-carrier sheet (2) is effected by laminating a multiplicity of data-carrier foils.

6. The method according to any of the preceding claims, **characterized in that** the data-carrier sheet (2) is dimensioned such that a multiplicity of data carriers (4) can be punched out thereof.

7. A processing apparatus (10), in particular for punching data carriers (4) in particular a credit card, an identification card, a bonus card and/or an admission ticket, out of a data-carrier sheet (2), having:
- a male punching unit (1) and a female punching unit (3), with the male punching unit (1) and the female punching unit (3) being configured for punching a data carrier (4) out of a data-carrier sheet (2) being greater in at least one dimension than a data carrier (4) to be manufactured,
**characterized in that**
the female punching unit (3) bears a color applying device (5) for applying color to an edge (12), in particular a circumferential edge, of a data carrier (4), wherein the color applying device (5) interacts with the male punching unit (3) such that upon punching out the data carrier (4) and/ or upon discharging the data carrier (4) from the female punching unit (3) an application of color to a circumferential data-carrier edge (12) of the punched data carrier (4) is effected, wherein the female punching device is provided with the color applying device such that the inking takes place in the female punching unit.

8. The processing apparatus according to claim 7, **characterized in that** the color is applicable by the color applying device (5, 6) by means of at least one nozzle, impregnated brushes, jet nozzles and/ or sponges.

9. The processing apparatus according to any of claims 7 and 8, **characterized in that** the color applying device (5, 6) is configured for applying the color along the data-carrier edge (12) in the circumferential direction in sections, wherein a different application of color can be effected in every section.

10. The processing apparatus according to any of claims 7 to 9, **characterized in that** the color applying device (5) bears a color changing device.

11. The processing apparatus according to any of claims 7 to 10, **characterized in that** the processing apparatus (10) bears a data-carrier cleaning device.

## Revendications

1. Procédé de fabrication pour un support de données en forme de carte, en particulier une carte de crédit, une carte d'identification, une carte avantage et/ou une carte d'entrée, comportant les étapes suivantes :
- génération d'une feuille pour supports de données (2), les dimensions de la feuille pour supports de données étant, en au moins une dimension, plus grandes qu'un support de données (4) à fabriquer,
- découpe du support de données (4) à partir de la feuille pour supports de données (2) au moyen d'un équipement de découpe (1, 3) comportant une unité de découpe mâle (1) et une unité de découpe femelle (3),
**caractérisé en ce que** :
l'unité de découpe femelle (3) est pourvue d'un équipement d'application d'encre (5, 6) qui co-agit de telle façon avec l'unité de découpe mâle (3) que, lors de la découpe du support de données (4) et/ou lors de l'extraction du supports de données (4) de l'unité de découpe femelle (3), une application d'encre a lieu sur un bord périphérique de support de données (12) du support de données (4) découpé, l'unité de découpe femelle étant pourvue de telle façon de l'équipement d'application d'encre que l'application d'encre a lieu dans l'unité de découpe femelle.

2. Procédé selon la revendication 1, **caractérisé en ce que** l'application de l'encre a lieu au moyen d'une ou de plusieurs buses, brosses imprégnées, buses à jet et/ou éponges.

3. Procédé selon la revendication 1 ou 2, **caractérisé en ce que** l'application d'encre a lieu par sections le long du bord de support de données (12) dans le sens du pourtour, cependant que, dans chaque section, une application différente d'encre peut avoir lieu.

4. Procédé selon une des revendications précédentes, **caractérisé en ce que** l' équipement d'application d'encre (5, 6) est agencé dans l'unité de découpe femelle (3).

5. Procédé selon une des revendications précédentes, **caractérisé en ce que** la génération de la feuille pour supports de données (2) a lieu par laminage d'une pluralité de films pour supports de données.

6. Procédé selon une des revendications précédentes, **caractérisé en ce que** la feuille pour supports de données (2) est dimensionnée de telle façon que, à partir d'elle, une pluralité de supports de données (4) peut être découpée.

7. Dispositif de traitement (10), en particulier pour la découpe de supports de données (4) en forme de carte, en particulier une carte de crédit, une carte d'identification, une carte avantage et/ou une carte d'entrée, à partir d'une feuille pour supports de données (2), comportant :
- une unité de découpe mâle (1) et une unité de découpe femelle (3), l'unité de découpe mâle (1) et l'unité de découpe femelle (3) étant conçues pour, à partir d'une feuille pour supports de données (2) qui, en au moins une dimension, est plus grande qu'un support de données (4) à fabriquer, découper un support de données (4),
**caractérisé en ce que**
l'unité de découpe femelle (3) est pourvue d'un équipement d'application d'encre (5) pour l'application d'encre sur un bord (12), en particulier sur un bord périphérique, d'un support de données (4), cependant que l'équipement d'application d'encre (5) co-agit de telle façon avec l'unité de découpe mâle (3) que, lors de la découpe du support de données (4) et/ou lors de l'extraction du supports de données (4) de l'unité de découpe femelle (3), une application d'encre a lieu sur un bord périphérique de support de données (12) du support de données (4) découpé, équipement de découpe femelle étant pourvue de telle façon de l'équipement d'application d'encre que l'application d'encre a lieu dans l'unité de découpe femelle.

8. Dispositif de traitement selon la revendication 7, **caractérisé en ce que** l'encre peut être appliquée au moyen d'au moins une buse, brosses imprégnées, buses à jet et/ou éponges par l'équipement d'application d'encre (5, 6).

9. Dispositif de traitement selon une des revendications 7 et 8, **caractérisé en ce que** l'équipement d'application d'encre (5, 6) est conçu pour appliquer l'encre par sections le long du bord de support de données (12) dans le sens du pourtour, cependant que, dans chaque section, une application différente d'encre peut avoir lieu.

10. Dispositif de traitement selon une des revendications de 7 à 9, **caractérisé en ce que** l'équipement d'application d'encre (5, 6) est pourvu d'un équipement de changement d'encre.

11. Dispositif de traitement selon une des revendications de 7 à 10, **caractérisé en ce que** le dispositif de traitement (10) est pourvu d'un équipement de nettoyage de supports de données.
